Europäisches Patentamt

**European Patent Office**

Office européen des brevets

(11) Veröffentlichungsnummer: **0 070 973**
A1

(12) **EUROPÄISCHE PATENTANMELDUNG**

(21) Anmeldenummer: **82103664.7**

(22) Anmeldetag: **29.04.82**

(51) Int. Cl.³: **F 15 B 9/08**
**B 64 C 27/64**

(30) Priorität: **28.07.81 DE 3129594**

(43) Veröffentlichungstag der Anmeldung:
**09.02.83 Patentblatt 83/6**

(84) Benannte Vertragsstaaten:
**FR GB IT**

(71) Anmelder: **Messerschmitt-Bölkow-Blohm Gesellschaft
mit beschränkter Haftung
Robert-Koch-Strasse
D-8012 Ottobrunn(DE)**

(72) Erfinder: **Szczeponik, Klaus, Dipl. Ing.
Nussbaumweg 1
D-8012 Ottobrunn(DE)**

(54) **Servosteuerventil, insbesondere für die hydraulische Servosteuerung eines Luftfahrzeuges.**

(57) Bei einem Servosteuerventil (12) für die hydraulische Servosteuerung eines Luftfahrzeugs mit zwei getrennt von einander und ohne gegenseitige Beeinflussung ansteuerbaren Steuersignaleingängen (50, 52) wird die Mischung und Überlagerung der Steuersignale am Ventilschieber (18) selbst in der Weise bewirkt, daß das eine Steuersignal über eine Längsverschiebung und das andere über eine Drehbewegung eingegeben wird und zwischen dem Ventilschieber (18) und dem längsverschiebend wirkenden Eingangsglied (50) eine das drehende Steuersignal (52) mechanisch in eine Steuerhubbewegung des Ventilschiebers umsetzende Steuerflächenanordnung vorgesehen ist, wodurch die Signalzuführung und -mischung der beiden getrennt eingegebenen Steuersignale in baulicher Hinsicht wesentlich vereinfacht und das Ausfallrisiko reduziert wird. Nach einem weiteren Aspekt der Erfindung wird durch eine Dreh-/Hubbegrenzung der Steuerflächenanordnung und eine Signal-Rückführung sowohl der als Längsverschiebung als auch der über eine Drehbewegung eingegebenen Steuersignale auf den ersten, linear verschiebenden Steuersignaleingang die Autorität des die Steuerflächenanordnung enthaltenden, zweiten Steuersignalpfads, bezogen auf die erzielbaren Stellbewegungen des dem Steuerventil nachgeschalteten Servomotors, kleiner als die des ersten Steuersignalpfads gehalten, wodurch ein sogenannter Runaway der Servosteuerung bei einem Ausfall des zweiten Steuersignalpfads ausgeschlossen wird und der Servomotor weiterhin uneingeschränkt vom ersten Steuersignalpfad her ansteuerbar bleibt.

FIG. 1

## Servosteuerventil

Die Erfindung bezieht sich auf ein Servosteuerventil, insbesondere für die hydraulische Servosteuerung eines Luftfahrzeugs, gemäß dem Oberbegriff des Anspruchs 1.

Bei den in der Luftfahrt üblichen, hydraulischen Servosteuerungen werden die Steuerkommandos des Piloten als lineare Stellsignale auf das Eingangsglied und den Ventilschieber des Servosteuerventils ein- und dann auf dem Wege einer entsprechenden Drucksteuerung des dem Steuerventil nachgeschalteten Servomotors als kraftverstärkte, ebenfalls lineare Stellbewegungen weitergegeben. Die Rückführung der Stellbewegungen des Servomotors auf das Steuerventil erfolgt über einen zweiarmigen Anlenkhebel, der einerseits mit der Kolbenstange des Servomotors und andererseits mit dem vom Piloten betätigten Steuerkommandogestänge gelenkig verbunden und zwischen seinen Enden schwenkbar an das Eingangsglied des Servosteuerventils angeschlossen ist. Auf diese Weise wird das Servosteuerventil durch die Stellbewegungen des Servomotors gegensinnig zu den vom Piloten eingegebenen Steuerkommandos auf seine neutrale Mittelstellung rückgesteuert, in der es den Servomotor – in einer jeweils durch die Steuerkommandos vorgegebenen Stellung – hydraulisch verriegelt.

Bei Servosteuerungen dieser Art ist es häufig erforderlich, den willkürlichen, manuellen Steuerkommandos automatisch weitere, im allgemeinen kurzzeitige und rasch wechselnde Steuersignale aufzuschalten, die unbeeinflußt von den Steuerkommandos etwa vom Flugregler erzeugt werden, z.B. Korrektursignale zur Aussteuerung von Böen, zur Lageregelung, für die Autopilot-Funktionen oder dgl. Diese zusätzlichen Steuer- oder Regelungsignale werden den manuell eingegebenen Steuerkommandos üblicherweise entweder vor oder hinter dem Servosteuerventil überlagert, wozu jeweils eine eigene Signal-Mischvorrichtung, die auf die maximalen Steuerkräfte im Steuerkommandogestänge oder gar auf die Stellkräfte des Servomotors ausgelegt sein muß, mit einem entsprechend hohen Bauaufwand und vor allem auch einer verhältnismäßig großen Hysterese (Steuerfehler) der Ansteuerung benötigt wird.

Diese Nachteile üblicher Servosteuerungen werden bei dem bekannten Servosteuerventil der eingangs erwähnten Art (DE-OS 28 55 636) dadurch vermieden, daß die Steuer- und Rückführsignale einerseits und die Regelungsignale andererseits im Servosteuerventil selbst in der Weise einanderüberlagert werden, daß der Ventilschieber in einer zusätzlichen, in der Gehäusebohrung verschieblich geführten, mit den Steueröffnungen versehenen Steuerhülse angeordnet ist und diese unabhängig von den über das erste Eingangsglied auf den Ventilschieber eingeleiteten Steuerbewegungen durch ein zweites Eingangsglied in Form eines elektrohydraulischen Hilfsservomotors von außen mit den automatischen Regelungssignalen vom Flugregler her angesteuert wird. Ein solches Servosteuerventil ist besonders für stark regelungsbedürftige Anwendungsfälle hervorragend geeignet, jedoch wegen der Anordnung einer zusätzlichen Steuerhülse und deren elektro-hydraulischer Ansteuerung in baulicher Hinsicht immer noch verhältnismäßig kompliziert, und ferner besteht - wie auch bei den übrigen bekannten Servosteuerungen - die Gefahr eines sog. Runaway, d.h. falls am Regelungs-Signaleingang, etwa aufgrund einer Störung des Flugreglers oder weil ein Elektroservoventil im Regelungssignalpfad nicht mehr ordnungsgemäß schließt, fälschlicherweise ein Dauersignal ansteht, läuft der Servomotor plötzlich unkontrolliert in seine Endstellung und kann vom Piloten zumeist auch dann nicht rechtzeitig

0070973
9032

abgefangen werden, wenn der Steuerkommandopfad noch voll funktionsfähig ist, so daß in diesem Fall die gesamte Servosteuerung unwirksam gemacht werden muß.

Demgegenüber ist die Aufgabe der Erfindung darin zu sehen, ein Servosteuerventil der eingangs erwähnten Art so auszubilden, daß eine wesentlich einfachere, ausfallsicherere Steuersignaleingabe und -überlagerung im Ventil selbst ohne ein zusätzliches, mit den Ventilsteueröffnungen versehenes, verschiebliches Ventilelement erzielt wird.

Diese Aufgabe wird erfindungsgemäß durch das im Anspruch 1 gekennzeichnete Servosteuerventil gelöst.

Bei dem erfindungsgemäßen Servosteuerventil ist der Ventilschieber das einzige, bewegliche, hydraulisch steuernde Ventilelement, auf das beide, unabhängig von einander und ohne gegenseitige Beeinflussung ansteuerbare Signaleingänge einwirken, und zwar das Steuersignal vom ersten Signaleingang in Form einer Linearverschiebung und das Steuersignal vom zweiten Signaleingang über eine Drehbewegung, die an der Steuerflächenanordnung zwischen der Steuerkante und dem ersten Eingangsglied in eine dem linear eingeleiteten Steuersignal überlagerte Steuerbewegung des Ventilschiebers umgewandelt wird. Aufgrund dieser besonderen Steuersignaleingabe und -überlagerung am Ventilschieber selbst wird die Bauweise des Servosteuerventils hinsichtlich seiner steuerungsmäßig kritischen, beweglichen Ventilelemente wesentlich vereinfacht und das Ausfallrisiko deutlich reduziert.

Ein weiterer, wesentlicher Aspekt der Erfindung liegt in der einfachen Ausgestaltung der Steuerflächenanordnung, die gemäß den Ansprüchen 2 und 3 zweckmäßigerweise durch Schrägstellung der Stirnseiten der Kolbenstege des Ventilschiebers oder durch eine Gewindeverbindung zwischen dem ersten Eingangsglied und dem Ventilschieber gebildet
wird, wahlweise aber auch eine einfache Kulissen-,
Nocken- oder Exzenter-Anordnung sein kann. Vorzugsweise
ist für den zweiten Steuersignaleingang gemäß Anspruch 4
die gleiche Signalrückführung wie für den ersten Steuersignaleingang vorgesehen, also etwa das eingangs erwähnte
Anlenkhebelsystem, so daß in weiterer, steuerungsmäßiger
und baulicher Vereinfachung die sonst für den zweiten
Steuersignaleingang erforderlichen, gesonderten Signalrückführungen mit zugeordneten Weggebern entfallen.

Nach den Ansprüchen 5 und 6 werden die Steuerkommandos
über das erste und die Regelungssignale über das zweite
Eingangsglied auf den Ventilschieber eingegeben und die
über den Regelungssignaleingang erzielbaren Steuerbewegungen des Ventilschiebers sind begrenzt und kleiner
als der wirksame Steuerbereich des Steuerkommandoeingangs. Diese Maßnahme der Erfindung ist ganz allgemein für Servosteuersysteme mit getrennten Steuer- und
Regelsignaleingängen unter dem Gesichtspunkt der Ausfallsicherheit von wesentlicher Bedeutung. Hierdurch
nämlich bleiben die Hubbewegungen des Servomotors
allein bei Ansteuerung über den Regelungssignaleingang unabhängig von der Stellung des Servomotors entsprechend der dem Steuerkommandopfad untergeordneten
Autorität des Regelungssignalpfades auch bei jedem denkbaren Ausfall des Regelungssignalpfades auf einen Bruchteil des Gesamthubs des Servomotors beschränkt, d.h.
auch bei einem Störfall des Regelungssignalpfades, der
sonst den oben erwähnten Runaway auslösen würde, vollzieht der Servomotor nur eine geringfügige, unkontrollierte Stellbewegung, die dem begrenzten Hublagen-Korrekturbereich bei ungestörtem Regelungssignalpfad entspricht, mit der Besonderheit, daß ein Ausfall des Regelungssignalpfades bis einschl. der der Steuerflächenanordnung zugeordneten, drehschlüssigen Verbindung die Funktionsfähigkeit des übrigen Teils der Servosteuerung nicht beeinflußt, also nach wie vor die Steuerkommandos des Piloten ohne Einschränkung des wirksamen Hubbereichs des Servomotors kraftverstärkt weitergegeben werden. Eine solche Störfallbegrenzung läßt sich auf konstruktiv äußerst einfache Weise durch entsprechende Ausbildung der Steuerflächenanordnung erreichen, also etwa bei einer Schräganstellung der Stirnflächen der Ventilschieber-Kolbenstege durch geeignete Wahl des Neigungswinkels der Stirnflächen bezüglich der Ventilschieber-Längsachse oder im Falle einer Gewinde-, Kulissen-, Exzenteranordnung oder dgl. durch entsprechend auf Abstand gehaltene Begrenzungsanschläge.

Im Hinblick auf eine baulich einfache, störunanfällige Ansteuerung des zweiten Eingangsgliedes ist im zweiten Steuersignalpfad gemäß Anspruch 7 zweckmäßigerweise ein elektrischer Drehsignalgeber geringer Antriebsleistung, z.B. ein elektrischer Schrittschaltmotor, vorgesehen, der den in der Gehäusebohrung leichtgängig verstellbaren Ventilschieber über das zweite Eingangsglied entsprechend den vom Flugregler erzeugten Regelungssignalen antreibt.

Die Erfindung wird nunmehr anhand mehrerer Ausführungsbeispiele in Verbindung mit den Zeichnungen näher erläutert. Es zeigt:

Fig. 1    eine hydraulische Servosteuerung mit zugeordnetem Servosteuerventil in schematischer Darstellung;

Fig. 2    eine schematische Teildarstellung des Ventilschiebers und der Gehäusebohrung längs der Linie II-II der Fig. 1, jedoch in einer gegenüber Fig. 1 längsverschobenen Ventilschieber-Stellung;

Fig. 3    eine der Fig. 2 entsprechende Darstellung, jedoch in einer gegenüber Fig. 1 um 90° verdrehten Ventilschieber-Stellung;

Fig. 4    einen schematischen Längsschnitt einer zweiten Ausführungsform eines Servosteuerventils;

Fig. 5a   eine Teildarstellung eines Servosteuerventils ähnlicher Bauart wie das gemäß Fig. 4, jedoch mit einer modifizierten Steuersignaleingabe über den zweiten Signaleingang; und

Fig. 5b   die Aufsicht der Steuerkulissenanordnung des in Fig. 5a gezeigten Servosteuerventils.

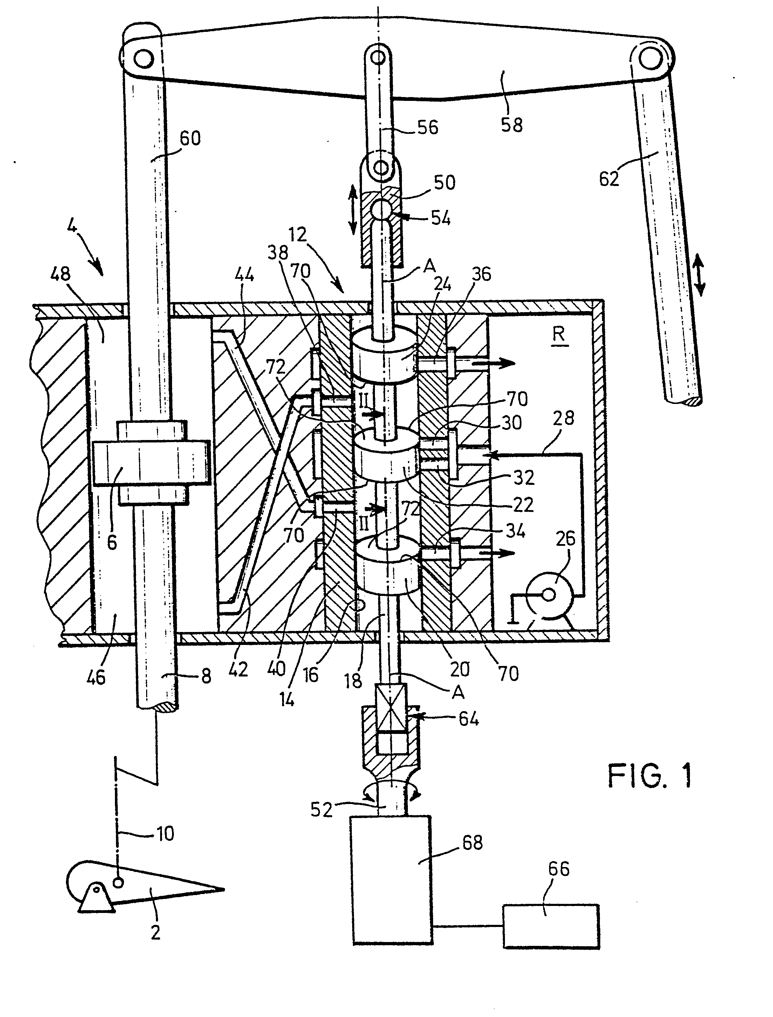

Die in Fig. 1 gezeigte Servosteuerung dient zur Einstellung einer beweglichen Tragfläche 2 eines Luftfahrzeugs, z.B. zur Blattwinkelsteuerung eines Hubschrauber-Hauptrotors, und enthält als Hauptbestandteile einen Servomotor 4 in Form einer doppelt wirkenden, hydraulisch betätigten Kolben-Zylindereinheit, deren Arbeitskolben 6 über eine Kolbenstange 8 und eine schematisch dargestellte, mechanische Verbindung 10 bewegungsschlüssig mit der Tragfläche 2 gekoppelt ist und die Betätigungskraft zu deren Einstellung aufbringt, sowie ein den Servomotor 4 hydraulisch steuerndes Servosteuerventil 12 mit einem Ventilgehäuse 14, in dessen zentraler Längsbohrung 16 ein Ventilschieber 18 längsverschieblich und drehbar geführt ist. Dieser enthält drei Kolbenstege 20, 22 und 24, deren mittlerer mit zwei an eine von einer Hydraulikpumpe 26 gespeiste Druckmittelzufuhrleitung angeschlossenen Steuerschlitzen 30 und 32 des Ventilgehäuses 14 zusammenwirkt, während die beiden äußeren Kolbenstege 20 und 24 jeweils einen zum Rücklauf R führenden Steuerschlitz 34 bzw. 36 auf- und zusteuern. Die zwischen den Kolbenstegen 20 und 22 bzw. 22 und 24 in die Gehäusebohrung 16 mündenden Arbeitsöffnungen 38 und 40 des Ventils 12 stehen über sich kreuzende Hydraulikkanäle 42 und 44 mit den Arbeitskammern 46 bzw. 48 des Servomotors 4 in Verbindung.

Die Steuerlage des Ventilschiebers 18 bezüglich der Steuerschlitze 30 bis 36 ist über zwei unabhängig von einander wirkende Steuersignal-Eingangsglieder 50 und 52 veränderlich einstellbar. Das erste Eingangsglied 50 ist über eine verschiebefeste, jedoch drehbare Verbindung 54 an den Ventilschieber 18 angeschlossen und über einen Zwischenlenker 56 gelenkig mit einem Anlenkhebel 58 verbunden, der einerseits an die zweite Kolbenstange 60 des Servomotors 4 und andererseits an das vom Piloten betätigte Steuerkommandogestänge 62 schwenkbar angeschlossen ist.

Das zweite Steuersignal-Eingangsglied 52 ist mit dem Ventilschieber 18 über eine drehschlüssige, eine Längsverschiebung des Schiebers jedoch zulassende Verbindung in Form einer Vierkant-Steckverbindung 64 gekoppelt und dient dazu, den über das Steuerkommandogestänge 62 eingegebenen Steuerbefehlen des Piloten am Ventilschieber 18 automatische Regelungssignale zu überlagern, die von einem Flugregler 66 erzeugt und einem diesem nachgeschalteten Schrittschaltmotor 68 eingegeben werden, der das zweite Eingangsglied 52 und - über die drehschlüssige Verbindung 64 - auch den Ventilschieber 18 in Drehrichtung veränderlich einstellt.

Um die vom zweiten Eingangsglied 52 auf den Ventilschieber 18 übertragene Drehbewegung in eine entsprechende Steuerbewegung des Ventilschiebers 18 bezüglich der Steuerschlitze 30 bis 36 umzusetzen, ist der Ventilschieber 18 mit einer Steuerflächenanordnung versehen, die bei diesem Ausführungsbeispiel durch Anordnung der mit den Steuerschlitzen zusammenwirkenden Steuerkanten 70 des Ventilschiebers 18 jeweils in einer schräg zur Schieberlängsachse A-A geneigten Ebene gebildet wird, d.h. die parallel zueinander verlaufenden Stirnseiten 72 der Kolbenstege 20, 22 und 24 sind nicht - wie üblich - senkrecht, sondern schräg geneigt zur Schieberlängsachse A-A angestellt.

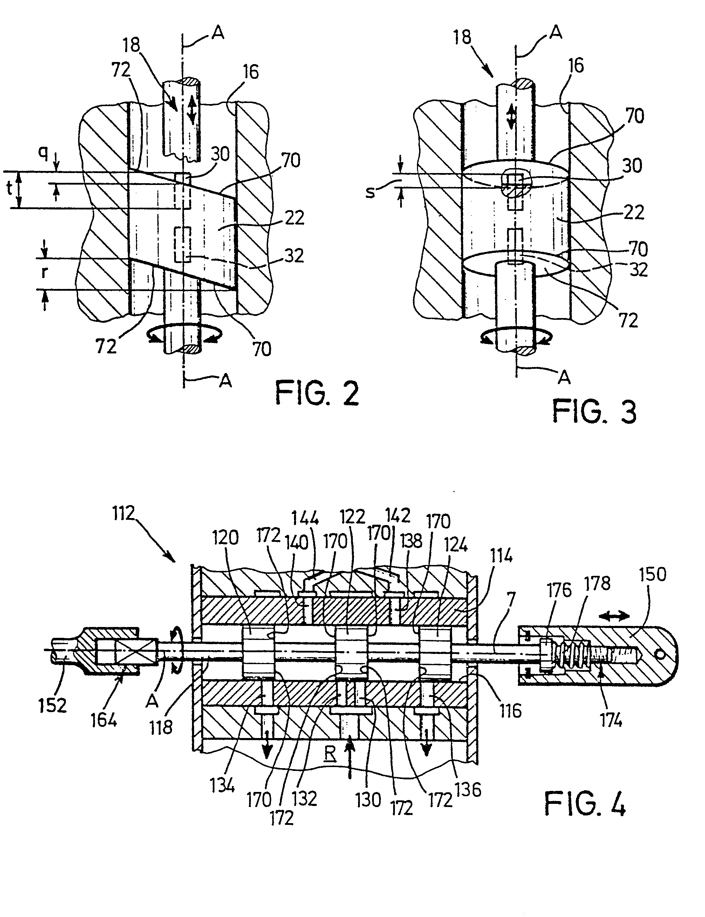

Fig. 1 zeigt das Servosteuerventil 12 in der neutralen Mittelstellung, in der sämtliche Steuerschlitze 30 bis 36 durch die Steuerkanten 70 der Kolbenstege 20, 22 und 24 gerade verschlossen sind und somit der Servomotor 4 hydraulisch verriegelt ist. Wird -vom Piloten über das Steuerkommandogestänge 62, den Anlenkhebel 58, den Zwischenlenker 56 und das Eingangsglied 50 ein Steuerkommando eingegeben, unter dessen Wirkung sich der Ventilschieber 18 etwa um die Strecke q (Fig. 2) im Sinne der Figuren 1 und 2 nach unten verschiebt, so werden der Druckzufuhrschlitz 30 durch die Steuerkante 70 des Kolbenstegs 22 und der Rücklaufschlitz 34 durch die Steuerkante 70 des Kolbenstegs 24 aufgesteuert und dadurch die Arbeitskammer 46 des Servomotors 4 über die Arbeitsöffnung 38 mit der Hydraulikpumpe 26 und die Arbeitskammer 48 über die Arbeitsöffnung 40 mit dem Rücklauf R in Verbindung gebracht. Unter der Wirkung der nach Größe und Richtung von der Relativverschiebung zwischen Ventilschieber 18 und Steuerschlitzen 30 bis 36 abhängigen Druckdifferenz zwischen den Arbeitskammern

46 und 48 verstellt sich der Arbeitskolben 6 des Servomotors 4 mit einer entsprechenden Stellgeschwindigkeit, wodurch die Tragfläche 2 verschwenkt wird. Die Stellbewegung des Servomotors 4 wirkt über die Kolbenstange 60, den Anlenkhebel 58, den Zwischenlenker 56 und das Eingangsglied 50 auf den Ventilschieber 18 gegensinnig zu der über das Steuerkommandogestänge 62 eingeleiteten Steuerbewegung zurück, bis der Ventilschieber 18 erneut seine in Fig. 1 gezeigte, neutrale Mittelstellung erreicht, in der er den Servomotor 4 – nunmehr in seiner neuen Stellung – wieder hydraulisch verriegelt.

Den willkürlichen Steuerkommandos des Piloten werden am Ventilschieber 18 die automatischen, sich im Vergleich zu den Steuerkommandos zumeist rascher ändernden Regelungssignale geringerer Amplitude in der Weise überlagert, daß die Steuerkanten 70 des Ventilschiebers 18 aufgrund der Schrägstellung der Kolbensteg-Stirnseiten 72 bei einer vom Flugregler 66 über den Schrittschaltmotor 68, das zweite Eingangsglied 52 und die drehschlüssige, längsverschiebliche Verbindung 64 eingeleiteten Drehbewegung des Ventilschiebers 18 ihre Steuerlage bezüglich der Steuerschlitze 30 bis 36 ändern, wie dies in Fig. 3 für den Kolbensteg 22 und die Druckzuführschlitze 30 und 32 in einer gegenüber Fig. 1 um 90$^\circ$ verdrehten Stellung des Ventilschiebers 18 dargestellt ist, in der der Steuerschlitz 30 von der Steuerkante 70 um die Strecke s freigegeben wird. Je nach Größe und Richtung der unabhängig von der Längsverschiebung eingeleiteten Drehbewegung des Ventilschiebers 18 wird der Servomotor 4 ebenfalls mehr oder weniger rasch in der einen oder anderen Richtung druckgesteuert, wobei seine Stellbewegung über den Rückführsignalpfad  60, 58 und 56 und das Eingangsglied 50 als
Längsverschiebung des Ventilschiebers 18 zurückwirkt,
bis die Steuerschlitze 30 bis 36 in der über das Eingangsglied 52 eingestellten Drehlage des Steuerschiebers 18 erneut vollständig von den Kolbenstegen 20 bis 24 verschlossen sind, wodurch der Regelungsvorgang beendet wird, ohne
daß das Steuerkommandogestänge 62 bewegt wurde.

Die Steuerkommandos und Regelungssignale können aber auch
gleichzeitig unabhängig voneinander und ohne gegenseitige
Beeinflussung eingegeben werden und überlagern sich dann
am Ventilschieber 18 in der Weise, daß der infolge eines
Steuerkommandos über das Eingangsglied 50 durch eine
Längsverschiebung bewirkte Öffnungshub q des Ventilschiebers 18 (Fig. 2) durch die vom Regelungssignal-Eingangsglied 52 über eine Drehbewegung erzeugte Steuerbewegung
s (Fig. 3) des Ventilschiebers 18 vergrößert, verkleinert
oder auch gerade aufgehoben oder soweit modifiziert wird,
daß der jeweils gegensinnig wirkende Druckmittelzufuhr-
bzw. Rücklauf-Steuerschlitz durch den Ventilschieber 18
aufgesteuert wird. Infolge dieser Signalmischung am Ventilschieber 18 kann also einer durch die Steuerkommandos
eingegebenen Gleichlaufbewegung eine von den Regelungssignalen verursachte Wechselbewegung des Arbeitskolbens
6 überlagert werden, wie dies etwa für eine Böen-Ausregelung notwendig ist.

Durch das Verhältnis r zu t (Fig. 2) wird die über den
Regelungssignalpfad 52, 64, 66, 68 maximal erzielbare
Stellgeschwindigkeit des Arbeitskolbens 6 festgelegt,
wobei r der maximal mögliche Drehhub des Ventilschiebers
18 ist und t die volle Länge der Steuerschlitze darstellt.
Die Autorität des Regelungssignalpfades ist begrenzt
durch den Drehhub r des Ventilschiebers 18 und wird wesentlich kleiner bemessen als der Steuerungsbereich des Steuerkommandopfads, weil ja die durch Regelungssignale zu bewirkenden Korrekturbewegungen sehr viel kleiner als der mit den Steuerkommandos zu steuernde Gesamthub des Arbeitskolbens 6 sind. Aufgrund dieser begrenzten Autorität des Regelungssignalpfads und der Einbeziehung der Signalrückführung über die Kolbenstange 60, den Anlenkhebel 58 und den Zwischenlenker 56, durch die jede Stellbewegung des Arbeitskolbens 6, also auch eine durch Drehung des Ventilschiebers bewirkte Hubkorrekturbewegung, über das erste Eingangsglied 50 als Längsverschiebung auf den Ventilschieber 18 zurückwirkt, wird sichergestellt, daß jeder denkbare Ausfall des Regelungssignalpfades bis einschl. zur drehschlüssigen Verbindung 64 den übrigen Teil der Servosteuerung nicht beeinflussen kann, so daß der Servomotor 4 vom Steuerkommandogestänge 62 her weiterhin uneingeschränkt steuerbar bleibt, und auch ein sog. Runaway bei einem Versagen des Flugreglers 66 völlig ausgeschlossen ist. Die Größe des maximalen Drehhubs r und somit der Neigungswinkel der Kolbensteg-Stirnseiten 72 wird natürlich in Abhängigkeit von der Größe der maximal notwendigen Regelungs- oder Korrekturbewegungen des Arbeitskolbens 6 gewählt.

Das in Fig. 4 gezeigte Ausführungsbeispiel, bei dem die dem Servosteuerventil gemäß den Figuren 1 bis 3 entsprechenden Teile durch das gleiche, jedoch um 100 erhöhte Bezugszeichen gekennzeichnet sind, unterscheidet sich vom ersten Ausführungsbeispiel hauptsächlich durch eine modifizierte Steuerflächenanordnung, die in diesem Fall aus einer Gewindeverbindung 174 zwischem dem Ventilschieber 118 und dem ersten, drehfest über den Zwischenlenker an den Anlenkhebel (nicht gezeigt) angeschlossenen Eingangsglied 150 besteht. Der Ventilschieber 118 selbst ist im Bereich seiner Kolbenstege 120, 122 und 124 von

üblicher Ausbildung, d.h. die Steuerkanten 170 und Stirnseiten 172 der Kolbenstege liegen jeweils in einer zur Schieber-Längsachse A-A senkrechten Ebene. Eine durch ein Regelungssignal über das zweite Eingangsglied 152 und die drehschlüssige, längsverschiebliche Verbindung auf den Schieber 118 eingeleitete Drehbewegung wird an der Gewindeverbindung 174 in eine Längsverschiebung des Ventilschiebers 118 und somit in eine Steuerbewegung der Steuerkanten 170 bezüglich des ersten Eingangsgliedes 150 umgewandelt, die sich der vom ersten Eingangsglied 150 vorgegebenen Steuerlage des Ventilschiebers 118 überlagert. Entsprechend der Drehhubbegrenzung r des ersten Ausführungsbeispiels sind auch bei dem Servosteuerventil 112 gemäß Fig. 4 die durch Regelungssignale über das zweite Eingangsglied 150 erzielbaren Steuerbewegungen durch einen Bund 176 an dem mit Gewinde versehenen Ventilschieberende und entsprechende Begrenzungsanschläge am ersten Eingangsglied 150 auf einen Bruchteil des wirksamen Steuerbereichs des ersten Eingangsgliedes 150 begrenzt. Eine zwischen dem Bund 176 und dem Eingangsglied 150 angeordnete Druckfeder 178 wirkt einem eventuellen Gewindespiel entgegen. Im übrigen entsprechen die Bauweise des Servosteuerventils 112 gemäß Fig. 4 sowie seine Anordnung und Funktion innerhalb der Servosteuerung der des ersten Ausführungsbeispiels.

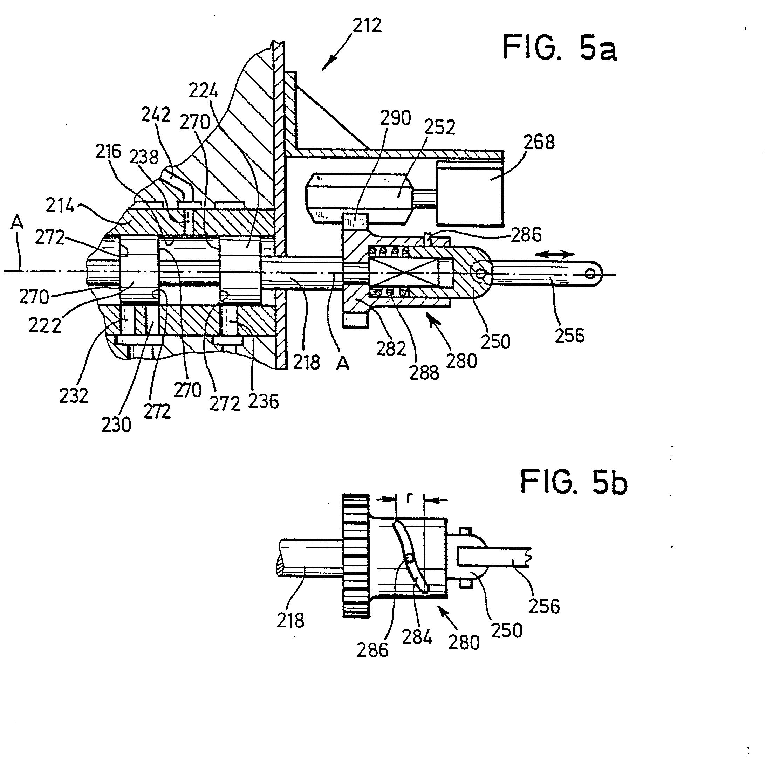

Bei der in den Figuren 5a, 5b gezeigten Teildarstellung eines weiteren Ausführungsbeispiels, bei dem die dem Servosteuerventil gemäß den Figuren 1 bis 3 entsprechenden Teile wiederum mit dem gleichen, jedoch um 200 erhöhten Bezugszeichen gekennzeichnet sind, erfolgt die Aufschaltung der Regelungssignale an dem mit dem ersten Eingangsglied 250 verbundenen Ventilschieberende, und zwar über eine die Steuerflächenanordnung bildende Kulissenführung 280, ohne daß der Ventilschieber 218 in der zugeordneten Gehäusebohrung 216 verdreht werden muß. Die Kulissenführung 280 enthält eine Führungsmuffe 282, die drehbar, in Schieberlängsrichtung A-A aber unverschieblich mit dem Ventilschieberende verbunden und auf dem Eingangsglied 250 dreh- und gleitfähig angeordnet ist. In der Muffe 282 befindet sich ein schräg zur Schieberlängsachse A-A geneigter Führungsschlitz 284, mit dem ein am Eingangsglied 250 gesicherter Führungsstift 286 zusammenwirkt. Eine Drehung der Führungsmuffe 282 auf dem über den Zwischenlenker 256 drehfest gehaltenen Eingangsglied 250 wird somit an der die Steuerflächenanordnung bildenden Kulissenführung in eine Längsverschiebung des Ventilschiebers 218 und somit eine Steuerbewegung der Steuerkanten 270 bezüglich der Steuerschlitze 230 bis 236 umgewandelt, die sich der vom Eingangsglied 250 eingestellten Steuerlage des Ventilschiebers 218 überlagert. Unter Einbeziehung des Rückführsignalpfads, der identisch wie beim ersten Ausführungsbeispiel ausgebildet ist und die Steuerbewegung des Ventilschiebers 218 vom Servomotor aus über den Anlenkhebel und den Zwischenlenker 256 als gegensinniges Rückführsignal auf das erste Eingangsglied 250 überträgt, wird wiederum die Autorität des die Kulissenführung 280 enthaltenden Regelungssignalpfades durch Begrenzung des maximalen Drehhubs r des Führungsschlitzes 284 kleiner als der wirksame Steuerbereich des ersten Eingangsgliedes 250 gehalten. Eine zwischen der Führungsmuffe 282 und dem Eingangsglied 250 angeordnete Druckfeder 288 wirkt einem möglichen Spiel zwischen dem Führungsschlitz 284 und dem Führungsstift 286 entgegen.

Die drehschlüssige, eine Längsverschiebung der Führungsmuffe 282 und des Ventilschiebers 218 jedoch zulassende Verbindung besteht in diesem Fall aus einer Geradver-

zahnung 290 zwischen dem als Ritzel ausgebildeten, zweiten
Eingangsglied 252 und der Führungsmuffe 282, derart, daß
sich bei stillstehendem Eingangsglied 252 und bei einer
über das Eingangsglied 250 eingeleiteten Längsverschiebung
des Ventilschiebers 218 die Drehlage der Führungsmuffe 280
gegenüber dem Eingangsglied 250 nicht ändert. Für die Steuerbewegungen des Ventilschiebers 218 in der Gehäusebohrung
216 sind ebenfalls wieder nur minimale Stellkräfte erforderlich, so daß der gesamte Regelungssignalpfad einschl.
des elektrischen Drehsignalgebers 268 sehr leistungsschwach bemessen sein kann. Im übrigen ist die Bauweise
des Servosteuerventils 212 und seine Funktion innerhalb
der Servosteuerung die gleiche wie bei den oben beschriebenen Ausführungsbeispielen.

MESSERSCHMITT-BÖLKOW-BLOHM
GESELLSCHAFT
MIT BESCHRÄNKTER HAFTUNG
MÜNCHEN

Ottobrunn, 10.07.81
BT01 Im/hch

9032

Patentansprüche
_____

1. Servosteuerventil, insbesondere für die hydraulische
Servosteuerung eines Luftfahrzeugs, mit einem in einer
Gehäusebohrung (16) geführten Ventilschieber (18) mit
mindestens einer, bei einer Längsverschiebung des Ventilschiebers eine zugeordnete Ventilsteueröffnung (30-
36) auf- bzw. zusteuernden Steuerkante (70), sowie
einem längsverschiebend auf den Ventilschieber einwirkenden, ersten (50) und einem von diesen unabhängigen,
die Stellung der Steuerkante bezüglich der Steueröffnung beeinflussenden, zweiten Steuersignal-Eingangsglied (52), dadurch  g e k e n n z e i c h n e t , daß
das zweite Eingangsglied (52) an den Ventilschieber
(18) unter Zwischenschaltung einer drehschlüssigen,
eine Längsverschiebung des Schiebers jedoch zulassenden Verbindung (64; 164; 290) angeschlossen und der Ventilschieber mit einer zwischen dem ersten Eingangsglied

- 2 -

(50) und der Steuerkante (70) wirkenden, eine vom zweiten
Eingangsglied (52) eingeleitete Drehbewegung in eine der
vom ersten Eingangsglied vorgegebenen Steuerlage überlagerte Steuerbewegung der Steuerkante (70) umsetzenden,
schräg zur Schieberlängsachse (A-A) geneigten Steuerflächenanordnung (72; 174; 284, 286) versehen ist.

2.  Servosteuerventil nach Anspruch 1, dadurch g e k e n n -
    z e i c h n e t , daß der Ventilschieber (18) einen vom
    zweiten Eingangsglied (52) in Drehrichtung angetriebenen
    Kolbensteg (20-24) aufweist, dessen mit der Steuerkante
    (70) versehene Stirnseite (72) als Steuerflächenanordnung
    vorgesehen ist und in einer zur Schieberlängsachse (A-A)
    geneigten Ebene verläuft.

3.  Servosteuerventil nach Anspruch 1, dadurch g e k e n n -
    z e i c h n e t , daß der Ventilschieber (118) über eine
    die Steuerflächenanordnung bildende, durch eine vom zweiten Eingangsglied (152) bewirkte Schieberdrehung längenverstellbare Schraubverbindung (174) an das erste Eingangsglied (150) angeschlossen ist.

4.  Servosteuerventil nach einem der vorhergehenden Ansprüche, mit einem nachgeschalteten, auf das Ventil (12) über
    eine Signalrückführung gegensinnig zu den Steuerbewegungen des Ventilschiebers (18) zurückwirkenden Servomotor
    (4), dadurch g e k e n n z e i c h n e t , daß die Sig-
    nalrückführung aus einem einzigen, auf das erste Eingangsglied (50) gegensinnig sowohl zu den über dieses eingeleiteten als auch zu den durch Drehbewegung aufgeschalteten
    Steuersignalen einwirkenden Rückführsignalpfad (56, 58,
    60) besteht.

9032 **0070973**

5. Servosteuerventil nach einem der vorhergehenden Ansprüche, dadurch g e k e n n z e i c h n e t, daß das erste Eingangsglied (50) manuell durch äußere Steuerkommandos und das zweite (52) durch die Regelungsignale eines automatischen Reglers (66) betätigt ist.

6. Servosteuerventil nach einem der vorhergehenden Ansprüche, dadurch g e k e n n z e i c h n e t, daß die vom zweiten Eingangsglied (52) durch Verdrehen der Steuerflächenanordnung (72; 174; 284, 286) erzielbaren Steuerbewegungen der Steuerkante (70) begrenzt und kleiner als der wirksame Steuerbereich des ersten Eingangsgliedes (50) sind.

7. Servosteuerventil nach einem der vorhergehenden Ansprüche, dadurch g e k e n n z e i c h n e t, daß zur Betätigung des zweiten Eingangsgliedes (52) ein elektrischer Drehsignalgeber (68) vorgesehen ist.

FIG. 1

FIG. 2

FIG. 3

FIG. 4

0070973

5/3

0070973

FIG. 5a

FIG. 5b

### Europäisches Patentamt

## EUROPÄISCHER RECHERCHENBERICHT

EP  82 10 3664

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int Cl ³) |
|---|---|---|---|
| X | DE-A-2 154 399  (APPLIED POWER) *Insgesamt* | 1,3-7 | F 15 B    9/08 B 64 C   27/64 |
| X | DE-C-  706 193  (JUNKERS) *Insgesamt* | 1,2,4, 5 | |
| A | GB-A-1 031 818  (DMITRIEV) *Insgesamt* | 4-6 | |
| A | US-A-2 521 557  (WYCKOFF) | | |
| A | US-A-3 285 141  (PALMER) | | |

---

| | |
|---|---|
| | RECHERCHIERTE SACHGEBIETE (Int. Cl. ³) |
| | F 15 B B 64 C |

Der vorliegende Recherchenbericht wurde für alle Patentansprüche erstellt.

| Recherchenort | Abschlußdatum der Recherche | Prüfer |
|---|---|---|
| DEN HAAG | 20-10-1982 | KNOPS J. |

KATEGORIE DER GENANNTEN DOKUMENTEN
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veroffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82